# EUROPÄISCHE PATENTSCHRIFT

(11) **EP 1 531 233 B1**
(45) Veröffentlichungstag und Bekanntmachung des Hinweises auf die Patenterteilung: **21.03.2007**
(21) Anmeldenummer: 04026131.5
(22) Anmeldetag: 04.11.2004
(51) Int. Cl.: F01D 5/14, F01D 9/04

(54) **Gasturbine mit mehreren feststehenden Leitschaufeln mit in der radialen Richtung unterschiedlicher Wölbung**
Gasturbine with vanes having different radial curvature
Turbine à gaz comprenant des aubes statoriques ayant différentes courbures radiales

(30) Priorität: 12.11.2003 DE 10352788
(43) Veröffentlichungstag der Anmeldung: 18.05.2005
(73) Patentinhaber: MTU Aero Engines GmbH, 80995 München (DE)
(72) Erfinder: Hoeger, Martin, Dr., 85435 Erding (DE); Schmidt-Eisenlohr, Uwe, 80997 München (DE)

(56) Entgegenhaltungen:
- EP-A- 0 441 097
- EP-A- 0 622 526
- FR-A- 996 967
- US-A- 5 397 215
- US-A- 6 017 186
- US-B1- 6 491 493

## Beschreibung

Die Erfindung betrifft eine Gasturbine, insbesondere einen Verdichter eines Flugtriebwerks, nach dem Oberbegriff des Patentanspruchs 1.

Flugtriebwerke bestehen aus mehreren Baugruppen, so zum Beispiel unter anderem aus einem Lüfter (Fan), einer Brennkammer, vorzugsweise mehreren Verdichtern sowie mehreren Turbinen. Bei den vorzugsweise mehreren Turbinen handelt es sich insbesondere um eine Hochdruckturbine sowie eine Niederdruckturbine, bei den mehreren Verdichtern insbesondere um einen Hochendruckverdichter sowie Niederdruckverdichter.

In einer Turbine sowie einem Verdichter einer Gasturbine, insbesondere eines Flugtriebwerks, sind in axialer Richtung bzw. in Durchströmungsrichtung der Gasturbine hintereinander mehrere Leitschaufelkränze positioniert, wobei jeder Leitschaufelkranz mehrere, über den Umfang verteilt angeordnete Leitschaufeln aufweist. Zwischen jeweils zwei benachbarten Leitschaufelkränzen ist jeweils ein Laufschaufelkranz positioniert, der mehrere Laufschaufeln aufweist. Die Laufschaufeln sind einem Rotor zugeordnet und rotieren zusammen mit dem Rotor gegenüber einem feststehenden Gehäuse sowie den ebenfalls feststehend ausgebildeten Leitschaufeln der Leitschaufelkränze.

Die Leitschaufeln eines Leitschaufelkranzes verfügen über eine im Querschnitt gewölbte Kontur, wobei eine erste Seite der Leitschaufeln als sogenannte Druckseite und eine zweite Seite der Leitschaufeln als sogenannte Saugseite ausgebildet ist. Zwischen zwei benachbarten Leitschaufeln eines Leitschaufelkranzes ist jeweils ein Strömungskanal ausgebildet, wobei jeder Strömungskanal einerseits von einer Saugseite einer Leitschaufel und andererseits von einer Druckseite der benachbarten Leitschaufel begrenzt wird. Die Durchströmung jedes Strömungskanals erfolgt dabei idiealerweise derart, dass die Anströmung der Leitschaufeln tangential zu einer gedachten Mittellinie der gewölbten Leitschaufelkontur erfolgt

Die EP-A-0 441 097 betrifft strömungstechnisch modifizierte Leitschaufeln fürTurboverdichter, insbesondere von Gasturbinen. Dabei handelt es sich um solche Leitschaufeln, welche an ihrem radial inneren und ihrem radial äußeren Ende mit einer feststehenden Kanalwand (inner wall 32, outer wall 34) verbunden sind, wobei die Kanalwände üblicherweise mit den Schaufelblättern (airfols 38) verbundene Deckbänder sind. Die Stapelachsen (stacking lines 52) der Schaufelblätter verlaufen hier nur im mittleren Bereich gerade und radial, zu der radial inneren und äußeren Kanalwand hin sind die Stapelachsen gekrümmt und geneigt, wodurch sich eine im radialen Verlauf zu den Kanalwänden hin jeweils konvexe Schaufeldruckseite (pressure surface) ergibt. In Verbindung mit einem negativen Anstellwinkel (incidence angle i) soll diese Schaufelform dazu führen, dass die Strömung im radial mittleren Schaufelbereich konzentriert wird, wodurch die kanalwandnahen Bereiche strömungstechnisch entlastet werden. Siehe hierzu die Figur 9 dieser Schrift. Dabei kann es günstig sein, die Anströmung in den entlasteten Bereichen z.B. durch eine stärkere Schaufelwölbung (overcambered airfoils) anzupassen und zu optimieren.

Die US-A-5 397 215 schützt Lauf- und Leitschaufeln für Turboverdichter, welche im Bereich ihres radial inneren und/oder äußeren Endes mit einer speziell konturierten Strömungskanalwand verbunden sind. Die Konturierung verläuft in Strömungsrichtung konvex/konkav/konvex, wobei die konkave Kanalerweiterung die Querschnittsverengung im Bereich der maximalen Schaufeldicke zumindest teilweise kompensiert. Damit ergibt sich ein gleichmäßigerer Geschwindigkeitsverlauf auf der kritischen Schaufelsaugseite - und somit weniger Strömungsverluste. Da die konturierte Kanalwand mit der Schaufel verbunden ist, ist sie bei Leitschaufeln statisch, bei Laufschaufeln rotierend bewegt. Die Konturierung lässt sich als wandseitige Einschnürung bzw. Einkerbung mit konvex/konkav/konvexem Verlauf beschreiben.

Hiervon ausgehend liegt der vorliegenden Erfindung das Problem zu Grunde, eine neuartige Gasturbine zu schaffen mit Leitschaufeln, welche zur rotierenden Nabe bzw. zum Rotor hin frei stehende, radial innere Enden aufweisen.

Dieses Problem wird dadurch gelöst, dass die eingangs genannte Gasturbine durch folgende Merkmale gebildet ist. Erfindungsgemäß sind die feststehenden Leitschaufeln zumindest im Bereich einer Strömungseintrittskante derselben am nabenseitigen, radial innenliegenden Ende unter Verringerung des effektiven Strömungsquerschnitts der Strömungskanäle stärker gewölbt als in einem weiter radial außenliegenden Abschnitt derselben, und die rotierende Nabe weist eine in Umfangsrichtung verlaufende Konturierung auf, wobei die Konturierung der Verringerung des Strömungsquerschnitts der Strömungskanäle entgegenwirkt und als mindestens eine in Umfangsrichtung verlaufende Einschnürung bzw. Einkerbung ausgebildet ist.

Nach einer vorteilhaften Weiterbildung der Erfindung weisen die feststehenden Leitschaufeln am nabenseitigen, radial innenliegenden Ende eine Kontur auf, die an die Konturierung der rotierenden Nabe angepasst ist. Hierdurch ist ein Spalt zwischen den radial innenliegenden Enden der Leitschaufeln und der Nabe minimiert.

Bevorzugte Weiterbildungen der Erfindung ergeben sich aus den abhängigen Unteransprüchen und der nachfolgenden Beschreibung.

Ausführungsbeispiele der Erfindung werden, ohne hierauf beschränkt zu sein, an Hand der Zeichnung näher erläutert. In der Zeichnung zeigt:
- Fig. 1:: einen Ausschnitt aus einer erfindungsgemäßen Gasturbine im Bereich eines Leitschaufelkranzes in radialer Blickrichtung von außen auf zwei feststehende Leitschaufeln des Leitschaufelkranzes und eine rotierende Nabe;
- Fig. 2:: die Anordnung gemäß Fig. 1 in Umfangsblickrichtung auf eine Leitschaufel des Leitschaufelkranzes mit einem Teilquerschnitt durch die Nabe; und
- Fig. 3:: eine Alternative zu der Anordnung gemäß Fig. 1 in Umfangsblickrichtung auf eine Leitschaufel des Leitschaufelkranzes mit einem Teilquerschnitt durch eine Nabe.

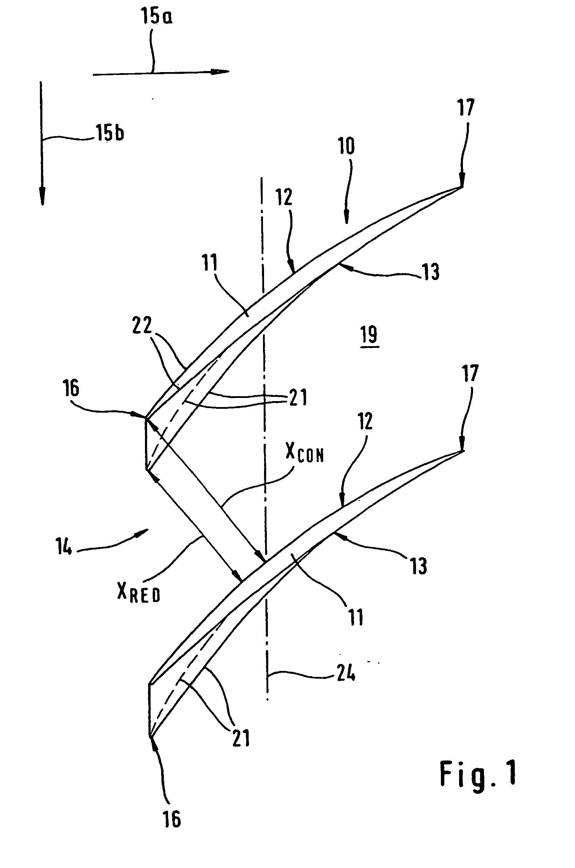

Nachfolgend wird die hier vorliegende Erfindung unter Bezugnahme auf Fig. 1 bis 3 in größerem Detail beschrieben.

Fig. 1 zeigt einen schematisierten Ausschnitt eines Leitschaufelkranzes 10 im Bereich von zwei Leitschaufeln 11. Die Darstellung der Fig. 1 entspricht einer Ansicht radial von außen auf die Leitschaufeln 11 des Leitschaufelkranzes 10. Gemäß Fig. 1 verfügen die beiden Leitschaufeln über eine gewölbte Kontur. Eine erste Seite 12 der beiden Leitschaufeln 11 ist als sogenannte Saugseite und eine zweite Seite 13 als sogenannte Druckseite ausgebildet. Die beiden Leitschaufeln 11, nämlich die als Saugseite ausgebildete erste Seite 12 der unteren Leitschaufel 11 sowie die als Druckseite ausgebildete zweite Seite 13 der oberen Leitschaufel 11, begrenzen einen Strömungskanal 14 zwischen den beiden Leitschaufeln 11.

Die Durchströmungsrichtung des Leitschaufelkranzes 10 ist in Fig. 1 durch einen Pfeil 15a visualisiert, der Strömungskanal 14 wird im Ausführungsbeispiel der Fig. 1 demnach von links nach rechts durchströmt. In Strömungsrichtung, die der axialen Richtung der Gasturbine entspricht, sind vorzugsweise mehrere derartige Leitschaufelkränze 10 hintereinander positioniert, wobei zwischen zwei benachbarten Leitschaufelkränzen jeweils ein nicht-dargestellter Laufschaufelkranz angeordnet ist. Eine in Strömungsrichtung (Pfeil 15a) vorn liegende Kante der Leitschaufeln 11 wird als Strömungseintrittskante 16 der Leitschaufeln bezeichnet. Die der Strömungseintrittskante 16 gegenüberliegende Kante wird als Strömungsaustrittskante 17 der Leitschaufeln 11 bezeichnet. Ein Pfeil 15b visualisiert die Umfangsrichtung des Leitschaufelkranzes 10.

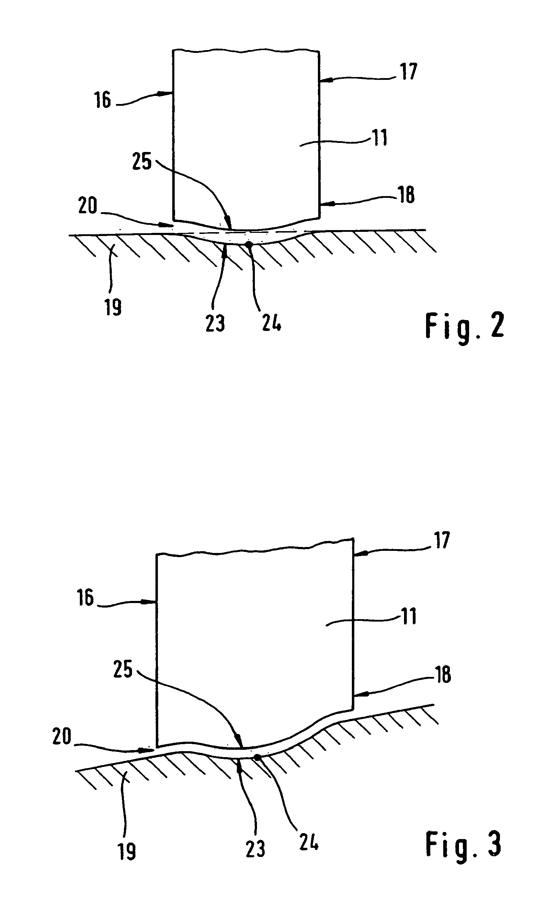

Die Leitschaufeln 11 des Leitschaufelkranzes 10 sind mit einem ersten, nichtdargestellten, radial außenliegenden Ende in einem Gehäuse verankert und ebenso wie das Gehäuse feststehend ausgebildet. Mit den radial außenliegenden Enden gegenüberliegenden, radial innenliegenden Enden 18 (siehe Fig. 2 und 3) grenzen die Leitschaufeln 11 an einen Rotor bzw. an eine rotierende Nabe 19 an. Aus betriebstechnischen Gründen ist zwischen der rotierenden Nabe 19 und den radial innenliegenden Enden 18 der feststehenden Leitschaufeln 11 des Leitschaufelkranzes 10 ein Spalt 20 ausgebildet. Das radial innenliegenden Ende 18 einer der Leitschaufeln 11 sowie ein derartiger Spalt 20 sind ausschließlich in Fig. 2 und 3 erkennbar, die einen Ausschnitt aus der Anordnung gemäß Fig. 1 in Umfangsblickrichtung darstellen. Wie erwähnt, ist Fig. 1 eine Ansicht auf die Leitschaufeln 11 des Leitschaufelkranzes 10 in radialer Blickrichtung radial von außen. Demzufolge erlaubt Fig. 1 zwischen den Leitschaufeln 11 einen Blick auf die rotierende Nabe 19.

Zur Optimierung des Wirkungsgrads sowie Pumpgrenzabstands der Gasturbine sind die Leitschaufeln 11 des Leitschaufelkranzes 10 gemäß Fig. 1 im Bereich der Strömungseintrittskanten 16 am nabenseitigen, radial innenliegenden Ende 18 unter Verringerung des effektiven Strömungsquerschnitts der Strömungskanäle 14 stärker gewölbt als in einem weiter radial außenliegenden Abschnitt derselben.

Fig. 1 verdeutlicht für jede der beiden Leitschaufeln 11 des Leitschaufelgitters 10 die Kontur bzw. Wölbung derselben am nabenseitigen, radial innenliegenden Ende 18 sowie an einem weiter radial außenliegenden Abschnitt. Die Kontur der Leitschaufeln 11 am nabenseitigen, radial innenliegenden Ende 18 ist in Fig. 1 mit der Bezugsziffer 21 gekennzeichnet, die Kontur des weiter radial außenliegenden Abschnitts mit der Bezugsziffer 22. Die Kontur der Saugseite im Bereich des nabenseitigen, radial innenliegenden Endes 18 ist in der Darstellung gemäß Fig. 1 verdeckt und daher gestrichelt dargestellt.

Wie oben bereits erwähnt, bewirkt die stärkere Wölbung der Leitschaufeln 11 im Bereich der Strömungseintrittskante 16 am nabenseitigen, radial innenliegenden Ende 18 eine Verringerung des Strömungsquerschnitts der Strömungskanäle 14. Dies ist in Fig. 1 durch die Pfeile X_{CON} sowie X_{RED} gezeigt. Der Pfeil X_{CON} visualisiert den konventionellen Strömungsquerschnitt des Strömungskanals 14 bei konventionell gewölbten Leitschaufeln 11 (Kontur 22), der Pfeil X_{RED} visualisiert den reduzierten bzw. verringerten Strömungsquerschnitt des Strömungskanals 14 durch die vergrößerte Wölbung (Kontur 21) der Leitschaufeln 11 an den nabenseitigen, radial innenliegenden Enden 18 derselben im Bereich der Strömungseintrittskante 16. Durch die obige Überwölbung der Leitschaufeln 11 in Umfangsrichtung (Pfeil 15b) des Leitschaufelkranzes im Bereich der Strömungseintrittskante 16 an den nabenseitigen, radial innenliegenden Enden 18 derselben lassen sich die Anströmwinkel sowie die strömungstechnische Inzidenz optimieren.

Die bereits oben beschriebene Verringerung des Strömungsquerschnitts der Strömungskanäle 14 durch die Überwölbung der Leitschaufeln 11 im Bereich der Strömungseintrittskanten 16 an den nabenseitigen, radial innenliegenden Enden 18 derselben ist aus Strömungsgründen unerwünscht. Daher weist die rotierende Nabe 19 erfindungsgemäß eine sich in Umfangsrichtung (Pfeil 15b) erstreckende Konturierung auf, wobei die Konturierung der oben beschriebenen Verringerung des Strömungsquerschnitts der Strömungskanäle 14 entgegenwirkt. Im gezeigten Ausführungsbeispiel ist die Konturierung als eine sich in Umfangsrichtung der Nabe 19 erstreckende Einschnürung bzw. Einkerbung 23 ausgebildet. Eine Mittellinie der Einkerbung 23 ist in Fig. 1 bis 3 mit der Bezugsziffer 24 gekennzeichnet. Fig. 2 zeigt die als Einkerbung 23 ausgebildete Konturierung der Nabe 19 bei einer zylinderförmigen Nabe und Fig. 3 zeigt die Einkerbung 23 bei einer konusförmig ausgebildeten Nabe 19.

Wie bereits erwähnt, ist zwischen den radial innenliegenden Enden 18 der Leitschaufeln 11 und der rotierenden Nabe 19 ein Spalt 20 ausgebildet. Um in Folge der Konturierung der Nabe 19 eine Vergrößerung des Spalts 20 und damit eine Vergrößerung der Leckageströmungen durch den Spalt 20 zu vermeiden, weisen die Leitschaufeln 11 an den nabenseitigen, radial innenliegenden Enden 18 eine Kontur auf, die an die Konturierung der Nabe 19 und damit die Kontur der Einkerbung 23 angepasst ist. Die Leitschaufeln 11 sind an den radial innenliegenden Enden 18 demnach zur rotierenden Nabe 19 hin gewölbt, wobei die Wölbung 25 der Kontur der Einkerbung 23 entspricht. In diesem Zusammenhang sei angemerkt, dass aus montagetechnischen Gründen bei einer zylinderförmig ausgebildeten Nabe 19 (siehe Fig. 2) die Wölbung 25 im Bereich der radial innenliegenden Enden 18 der Leitschaufeln 11 nicht über eine äußere, zylindrische Mantelfläche der zylindrischen Nabe 19 vorstehen darf. Bei einer konusförmig ausgebildeten Nabe 19 (siehe Fig. 3) ist dies hingegen von untergeordneter Bedeutung.

Im Sinne der hier vorliegenden Erfindung wird demnach zur Optimierung des Wirkungsgrads sowie Pumpgrenzabstands vorgeschlagen, in einem ersten Schritt die Leitschaufeln im Bereich der Strömungseintrittskanten an nabenseitigen, radial innenliegenden Enden derselben zu überwölben bzw. stärker zu wölben als in einem weiter radial außenliegenden Abschnitt. Die dadurch bewirkte Verringerung des Strömungsquerschnitts der Strömungskanäle zwischen benachbarten Leitschaufeln wird dadurch zumindest teilweise ausgeglichen, dass die Nabe eine sich in Umfangsrichtung erstreckende Konturierung aufweist. Die Konturierung der Nabe ist als mindestens eine in Umfangsrichtung verlaufende Einkerbung ausgebildet. Um einer durch die oder jede Einkerbung bewirkten Vergrößerung des Spalts zwischen der rotierenden Nabe und den radial innenliegenden Enden der Leitschaufeln entgegenzuwirken, ist die Kontur der radial innenliegenden Enden der Leitschaufeln an die Kontur der oder jeder Einkerbung angepasst. Die radial innenliegenden Enden der Leitschaufeln sind demnach in Richtung auf die rotierende Nabe bzw. in Richtung auf die oder jede Einkerbung der rotierenden Nabe hin gewölbt.

Das oben beschriebene Konstruktionsprinzip kann sowohl bei Verdichtern als auch bei Turbinen einer Gasturbine, insbesondere eines Flugtriebwerks, zum Einsatz kommen.

## Patentansprüche

1. Gasturbine, insbesondere Verdichter eines Flugtriebwerks, mit mehreren feststehenden Leitschaufeln (11), wobei die Leitschaufeln (11) mindestens einen Leitschaufelkranz (10) bilden, wobei die Leitschaufeln (11) mit radial außenliegenden Enden in einem Gehäuse verankert sind und mit radial innenliegenden Enden (18) an eine rotierenden Nabe (19) bzw. einen Rotor angrenzen, und wobei die Leitschaufeln (11) zwischen denselben verlaufende Strömungskanäle (14) begrenzen, wobei :
a) die Leitschaufeln (11) zumindest im Bereich einer Strömungseintrittskante (16) derselben am nabenseitigen, radial innenliegenden Ende (18) unter Verringerung des Strömungsquerschnitts der Strömungskanäle (14) stärker gewölbt sind als in einem weiter radial außenliegenden Abschnitt derselben, und
b) die Nabe (19) eine in Umfangsrichtung verlaufende Konturierung aufweist, wobei die Konturierung der Verringerung des Strömungsquerschnitts der Strömungskanäle (14) entgegenwirkt und als mindestens eine in Umfangsrichtung verlaufende Einschnürung bzw. Einkerbung (23) ausgebildet ist.

2. Gasturbine nach Anspruch 1, **dadurch gekennzeichnet, dass** die rotierende Nabe (19) zylinderförmig oder konusförmig ausgebildet ist.

3. Gasturbine nach Anspruch 1 oder 2, **dadurch gekennzeichnet, dass** die Leitschaufeln (11) am nabenseitigen, radial innenliegenden Ende (18) eine Kontur aufweisen, die an die mindestens eine Einschnürung bzw. Einkerbung (23) der Nabe (19) angepasst ist.

4. Gasturbine nach Anspruch 3, **dadurch gekennzeichnet, dass** hierdurch ein Spalt (20) zwischen den radial innenliegenden Enden (18) der Leitschaufeln (11) und der rotierenden Nabe (19) minimiert ist.

## Claims

1. A gas turbine, in particular a compressor of an aircraft engine, having a plurality of fixed guide vanes (11), wherein the guide vanes (11) form at least one guide-vane ring (10), wherein the guide vanes (11) with radially external ends are anchored in a housing and with radially internal ends (18) adjoin a rotating hub (19) or a rotor, and wherein the guide vanes (11) delimit flow channels (14) that extend between them, wherein
a) the guide vanes (11) are curved to a greater extent at least in the region of a flow-inlet edge (16) of the same at the hub-side, radially internal end (18) with reduction of the flow cross section of the flow channels (14) than in a section of the same that lies further outside radially, and
b) the hub (19) has a contouring extending in the circumferential direction, with the contouring counteracting the reduction in the flow cross section of the flow channels (14) and being formed as at least one constriction or notch (23) that extends in the circumferential direction.

2. A gas turbine according to claim 1, **characterised in that** the rotating hub (19) is formed in a cylindrical or conical manner.

3. A gas turbine according to claim 1 or 2, **characterised in that** the guide vanes (11) at the hub-side, radially internal end (18) have a contour that is matched to the at least one constriction or notch (23) of the hub (19).

4. A gas turbine according to claim 3, **characterised in that** in this way a gap (20) between the radially internal ends (18) of the guide vanes (11) and the rotating hub (19) is minimized.

## Revendications

1. Turbine à gaz, en particulier compresseur d'un groupe motopropulseur, comportant plusieurs aubes directrices fixes (11), les aubes directrices (11) formant au moins une couronne d'aubes (10), les aubes directrices (11) étant ancrées dans un carter par des extrémités radialement à l'extérieur et jouxtant, par des extrémités radialement à l'intérieur (18), un moyeu en rotation (19) respectivement un rotor et les aubes directrices (11) limitant, entre celles-ci, des canaux d'écoulement (14),
dans laquelle
a) les aubes directrices (11), au moins au niveau d'une arête d'entrée d'écoulement (16) de celles-ci, sur l'extrémité radialement à l'intérieur (18) côté moyeu avec réduction de la section d'écoulement des canaux d'écoulement (14), sont davantage bombées que dans un autre tronçon radialement à l'extérieur et,
b) le moyeu (19) présente un contour dans le sens périphérique, le contour agissant contre la réduction de la section d'écoulement des canaux d'écoulement (14) et étant configuré sous la forme d'au moins une striction ou d'une encoche (23) dans le sens périphérique.

2. Turbine à gaz selon la revendication 1,
**caractérisée en ce que**
le moyeu (19) en rotation est en forme de cylindre ou de cône.

3. Turbine à gaz selon la revendication 1 ou la revendication 2,
**caractérisée en ce que**
les aubes directrices (11) présentent, sur l'extrémité radialement à l'intérieur (18) côté moyeu, un contour adapté à au moins une striction ou une encoche (23) du moyeu (19).

4. Turbine à gaz selon la revendication 3,
**caractérisée en ce que**
ceci réduit une fente (20) entre les extrémités radialement à l'intérieur (18) des aubes directrices (11) et le moyeu (19) en rotation.
